# EUROPEAN PATENT SPECIFICATION

(11) **EP 4 016 323 B1**
(45) Date of publication and mention of the grant of the patent: **02.12.2026**
(21) Application number: 21774939.9
(22) Date of filing: 05.02.2021
(51) Int. Cl.: H04L 9/00

(54) **SYNCHRONOUS PROCESSING METHOD AND RELATED APPARATUS**
VERFAHREN ZUR SYNCHRONEN VERARBEITUNG UND ZUGEHÖRIGE VORRICHTUNG
PROCÉDÉ DE TRAITEMENT SYNCHRONE ET APPAREIL ASSOCIÉ

(30) Priority: 24.03.2020 CN 202010212529
(43) Date of publication of application: 22.06.2022
(73) Proprietor: Tencent Technology (Shenzhen) Company Limited, Shenzhen, Guangdong 518057 (CN)
(72) Inventor: LI, Maocai, Shenzhen, Guangdong 518057 (CN); WANG, Zongyou, Shenzhen, Guangdong 518057 (CN); ZHANG, Jinsong, Shenzhen, Guangdong 518057 (CN); ZHOU, Kaiban, Shenzhen, Guangdong 518057 (CN); SHI, Yifang, Shenzhen, Guangdong 518057 (CN); HUANG, Huankun, Shenzhen, Guangdong 518057 (CN); LIU, Qucheng, Shenzhen, Guangdong 518057 (CN); LIU, Pan, Shenzhen, Guangdong 518057 (CN); LAN, Hu, Shenzhen, Guangdong 518057 (CN); YANG, Changqing, Shenzhen, Guangdong 518057 (CN); ZHU, Gengliang, Shenzhen, Guangdong 518057 (CN); KONG, Li, Shenzhen, Guangdong 518057 (CN)
(74) Representative: Nederlandsch Octrooibureau
(86) International application number: PCT/CN2021/075370
(87) International publication number: WO 2021/190179

(56) References cited:
- CN-A- 107 332 876
- CN-A- 109 522 362
- CN-A- 110 011 788
- CN-A- 110 430 087
- CN-A- 110 569 305
- CN-A- 111 444 203
- US-A1- 2019 349 185

## Description

### RELATED APPLICATION

### FIELD OF THE TECHNOLOGY

This application relates to the field of blockchain technologies, and specifically, to blockchain-based synchronization processing.

### BACKGROUND OF THE DISCLOSURE

When a node device in a blockchain network performs blockchain synchronization processing, the node device obtains required blocks one by one from other node devices (such as consensus node devices or synchronization node devices) in the blockchain network.

CN110430087A discloses a data synchronization process for a consensus node of a blockchain network. The consensus node can determine that blocks are missing, and can send a request for each missing block to a respective other consensus node.

### SUMMARY

Embodiments of this application provide a synchronization processing method and a related apparatus, which can effectively improve the synchronization processing efficiency, as summarized in the attached claims.

### BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from the accompanying drawings without creative efforts.
FIG. 1 is an infrastructure diagram of a blockchain according to an exemplary embodiment of this application.
FIG. 2 is a schematic structural diagram of a blockchain according to an exemplary embodiment of this application.
FIG. 3 is a schematic architectural diagram of a blockchain network according to an exemplary embodiment of this application.
FIG. 4 is a schematic structural diagram of a framework according to an exemplary embodiment of this application.
FIG. 5 is a flowchart of a synchronization processing method according to an exemplary embodiment of this application.
FIG. 6 is a flowchart of another synchronization processing method according to an exemplary embodiment of this application.
FIG. 7 is a schematic structural diagram of a synchronization processing apparatus according to an exemplary embodiment of this application.
FIG. 8 is a schematic structural diagram of a synchronization processing device according to an exemplary embodiment of this application.

### DESCRIPTION OF EMBODIMENTS

The technical solutions in the embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

The embodiments of this application relate to blockchain technologies. Blockchain is a set of decentralized infrastructure with distributed storage characteristics. Specifically, the blockchain is a data structure including data blocks in a chronological order in a manner similar to a linked list, which can safely store sequential data that can be verified in a system, and cryptographically ensure that the data cannot be tampered with or forged.

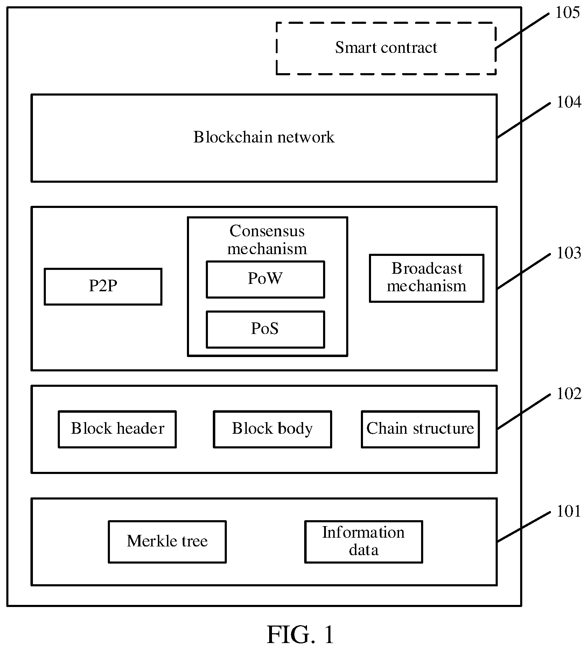

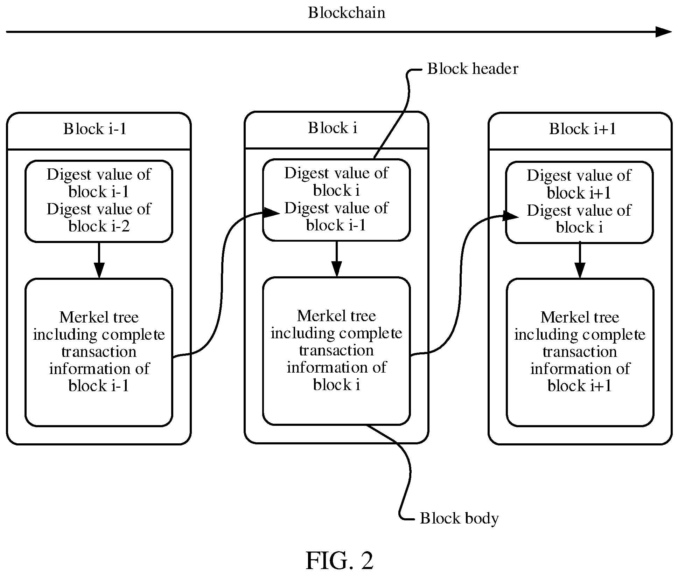

FIG. 1 is an infrastructure diagram of a blockchain according to an exemplary embodiment of this application. As shown in FIG. 1, an infrastructure of the blockchain mainly includes a total of five layered structures 101 to 105 in a bottom-up order.
(1) Information data and a Merkle tree are located at the bottom layer 101. The information data herein is raw data that is requested to be published to a blockchain network, but has not formed a block. For example, the information data may be service data or transaction data. The raw data needs to be further processed (for example, verified by nodes in the blockchain network, and hashed) before being written into the block. The Merkle tree is an important component of the blockchain technologies. The blockchain does not directly store the raw data in plaintext, and the raw data needs to be hashed and stored in a form of a hash value. The Merkel tree is used for organizing the hash value formed by the plurality of pieces of hashed raw data in a binary tree structure and store the hash value in a block body of the block.
(2) The block is located at the layer 102. The block is a data block, and the information data of the bottom layer 101 is further processed and then written into a block in the layer 102. The plurality of blocks are sequentially connected into a chain structure to form a blockchain. In the chain structure, a previous block has a parent-child relationship with a next adjacent block. FIG. 2 is a schematic structural diagram of a blockchain according to an exemplary embodiment of this application. As shown in FIG. 2, a block i-1 (i is a positive integer), a block i, and a block i+1 are sequentially connected into a chain structure. The block i is divided into two parts: a block header and a block body. The block header includes a digest value of the previous block i-1 and a digest value of the block i (that is, a Merkle root of the block). The block body includes complete data of the block i and is organized in a form of the Merkle tree. The block i-1 has a parent-child relationship with the block i, that is, the block i-1 is a parent block of the block i, and the block i is a child block of the block i-1. Similarly, the block i is a parent block of the block i+1, and the block i+1 is a child block of the block i.
(3) Protocols and mechanisms followed by the blockchain are located at the layer 103. The protocols may include: a peer-to-peer (P2P) protocol; and the mechanisms may include but are not limited to: a broadcast mechanism and a consensus mechanism (including core mechanisms such as a proof of work (POW) mechanism and a proof of stake (POS) mechanism).
(4) The blockchain network is located at the layer 104. The blockchain network includes a plurality of node devices. The node device may be a computer device, including but not limited to: a personal computer (PC), a server, a mining machine, a smartphone, a tablet computer, a mobile computer, or the like. The node devices in the blockchain network are networked in a P2P manner, and the node devices communicate with each other according to the P2P protocol. The node devices jointly follow the broadcast mechanism and the consensus mechanism (including core mechanisms such as a POW mechanism and a POS mechanism) to jointly ensure immutability and unforgeability of data on the blockchain, and implement decentralization and trustlessness of the blockchain.
(5) A smart contract is located at the upper layer 105. The smart contract is a set of scenario-responsive procedural rules and logic, and is a decentralized and information-sharing program code deployed in the blockchain. Parties that sign the contract reach an agreement on the content of the contract and the contract is deployed in the blockchain in a form of the smart contract, which means that the contract can be automatically performed on behalf of each signatory without relying on any central agency.

Types of the blockchain may include: a public blockchain, a private blockchain, and a consortium blockchain. The public blockchain is open to the public, and anyone can join and access the blockchain. Blocks on the public blockchain can be viewed by anyone, and anyone can initiate transactions on the public blockchain and can participate in a consensus process of the public blockchain at any time. The private blockchain is only used inside a private organization, and read and write permissions and an accounting permission on the blockchain are made according to rules of the private organization. The private blockchain is usually used for data management and auditing inside an enterprise. Only consortium members can participate in the consortium blockchain, and read and write permissions and an accounting permission on the blockchain are made according to consortium rules. The consortium blockchain is generally used in scenarios such as inter-institutional transactions, settlement, or clearing. The infrastructure of the blockchain shown in FIG. 1 is the basis for the development of various types of blockchains. It may be understood that, there are also some differences in networking manners of blockchain networks corresponding to different types of blockchains. Because the blockchain has characteristics of decentralization, distributed storage, and immutability and unforgeability of data, more service activities (such as lending activities and financial transaction activities) are carried out based on blockchain technologies to make use of the characteristics of the blockchain to ensure fairness and openness of the service activities.

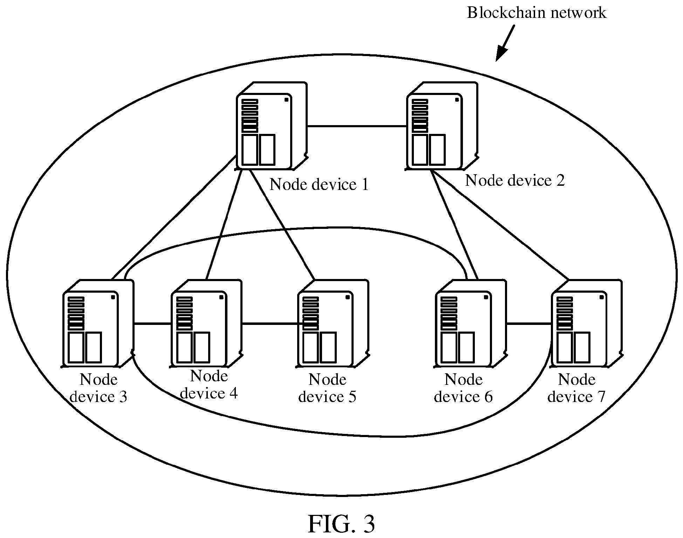

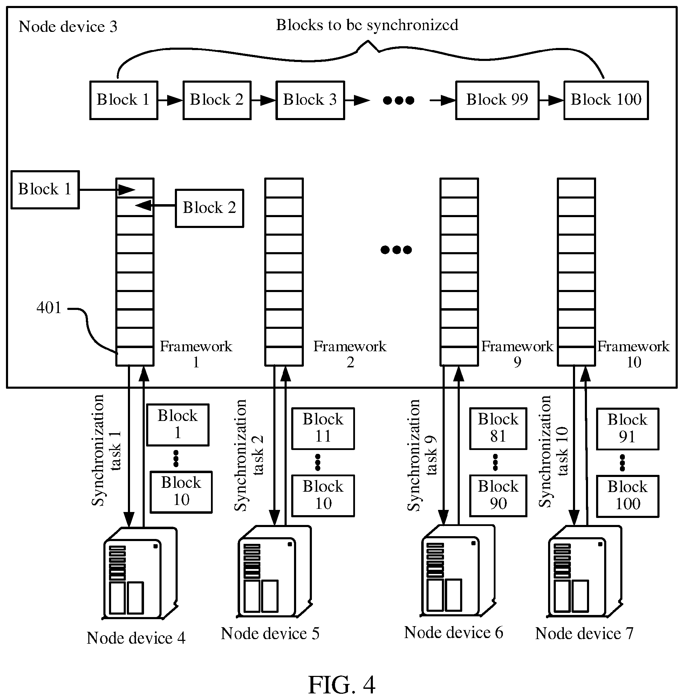

FIG. 3 is a schematic architectural diagram of a blockchain network according to an exemplary embodiment of this application. The blockchain network includes a plurality of node devices (7 node devices are used in the figure as an example for description). As shown in FIG. 4, a node device 1 and a node device 2 are consensus node devices, and a node device 3 to a node device 7 are all synchronization node devices. The consensus node device is a node device that can not only perform a block synchronization process, but also participate in a block consensus process. The synchronization node device is a node device that can only perform the block synchronization process but cannot participate in the block consensus process.

The blockchain is a distributed application mode, and each node device in the blockchain network stores one blockchain. Specifically, in the blockchain network shown in FIG. 3, the node device 1 stores a blockchain 1 in a storage space of the node device 1, the node device 2 stores a blockchain 2 in a storage space of the node device 2, the node device 3 stores a blockchain 3 in a storage space of the node device 3, and so on. Due to differences in network connection performances, differences in processing performances, and time differences in joining the blockchain network, there are differences between the blockchains stored in the node devices in the blockchain network, and the node devices in the blockchain network need to perform synchronization or other means to maintain the consistency between the blockchains stored in the node devices. For example, there are already n (n is a positive integer) node devices in the blockchain network, and a node device n+1 is newly added to the blockchain network. For the node device n+1, no block has been stored in a storage space of the node device n+1, and a block height of a blockchain n+1 of the node device n+1 is 0. For a node device n that already exists in the blockchain network, the node device n may have stored 10001 blocks, and a block height of the blockchain n stored in a storage space of the node device n may be 10000. Therefore, the node device n+1 lags behind the node device n, and the node device n+1 needs to perform a block synchronization process to obtain all blocks between the block height 0 and the block height 10000 to update the blockchain n+1 of the node device n+1 to catch up with the node device n. In actual application, a new block generated in the blockchain network needs to be reached consensus by the consensus node device first. After consensus is reached, the consensus node device adds the new block to the blockchain locally stored in the consensus node device. The synchronization node device in the blockchain network then obtains the new block from the consensus node device and adds the new block to the blockchain locally stored in the synchronization node device to complete the block synchronization process. Based on this, it is generally recognized that the blockchain stored in the consensus node device is the longest (or most complete) blockchain in the blockchain network, and the blockchain stored in the consensus node device can be used as a reference blockchain during the synchronization processing.

Based on the architecture of the blockchain network shown in FIG. 3, this embodiment of this application provides a synchronization processing solution, which introduces a concept of a framework. FIG. 4 is a schematic structural diagram of a framework according to an exemplary embodiment of this application. The framework is a data structure. One framework includes a plurality of data units 401, and each data unit is configured to store a block. Referring to the example shown in FIG. 4, assuming that any node device in the blockchain network (assuming being the node device 3 shown in FIG. 3) needs to synchronize 100 blocks: a block 1 to a block 100, the synchronization processing of the node device 3 includes the following step (1) to step (4):
(1) Construct a framework set according to blocks to be synchronized, where the framework set includes a plurality of frameworks.
   As shown in FIG. 4, it is assumed that the framework set includes a total of 10 frameworks, each framework includes 10 data units 401, and the data units 401 are reserved for storing synchronization blocks after the node device 3 obtains the synchronization blocks. Using a framework 1 as an example, the framework 1 includes 10 data units 401, the data units are sequentially arranged, the first data unit is configured to store a block 1, the second data unit is configured to store a block 2, and so on. In the framework set, the quantities of data units included in the frameworks is the same. As shown in FIG. 4, each framework may include 10 data units. In an example not claimed, the quantities of data units included in the frameworks may also be different. For example, in FIG. 4, the framework 1 may include 10 data units, a framework 2 may include 5 data units, a framework 3 may include 15 data units, and the like. The node device 3 can set the quantity of the frameworks and the quantity of the data units included in the framework according to an actual situation. The actual situation herein may include but is not limited to: the quantity and processing capabilities of the node devices in a candidate node set, an actual concurrent transmission processing capability of the node device 3, or the like.
(2) Create a synchronization task set for the framework set, where the synchronization task set includes a plurality of synchronization tasks, and one framework corresponds to one synchronization task.
   As shown in FIG. 4, the framework 1 corresponds to a synchronization task 1, the framework 2 corresponds to a synchronization task 2, the framework 3 corresponds to a synchronization task 3, and so on. The synchronization task corresponding to each framework is used for indicating to return a plurality of blocks used by the framework for storage. For example, the synchronization task 1 corresponding to the framework 1 is used for indicating to return the block 1 to a block 10 used by the framework 1 for storage to the node device 3. In another example, the synchronization task 2 corresponding to the framework 2 is used for indicating to return a block 11 to a block 20 used by the framework 2 for storage to the node device 3. The synchronization task carries indication information, and the indication information includes indexes of blocks corresponding to the first and last two data units in the framework. The index herein may be a hash value of the block, or a generation timestamp of the block, or a block height corresponding to the block. In this way, after receiving the synchronization task, another node device returns the two blocks in the framework and all the blocks between the two blocks to the node device 3 according to the indexes of the two blocks in the indication information. The indication information may also include indexes of all blocks used by the framework for storage, so that after receiving the synchronization task, another node device returns all needed blocks to the node device 3 according to the indexes of all the needed blocks.
(3) For each of the synchronization tasks, select one second node device, where the second node device is a node device that is in a blockchain network and that is connected to a first node device and configured to perform a synchronization task.

First, a candidate node set is determined, where the candidate node set includes a candidate node device directly connected to the node device 3. As shown in FIG. 3, the candidate node set of the node device 3 includes the node device 1 and the node device 4 to the node device 7. The node device 1 is a consensus node device and further needs to perform a consensus task. Therefore, to avoid imposing processing burden on the node device 1, and to improve the synchronization efficiency, the node device 4 to the node device 7 can be selected from the candidate node set as the second node device to perform the synchronization task. Next, the corresponding second node device is matched for each synchronization task, where the matching mainly has the following policies:
Policy 1: Match according to a storage situation. The synchronization task is matched for the second node device storing a corresponding block. For example, if the synchronization task 1 requires to synchronize the block 1 to the block 10, the second node device storing the block 1 to the block 10 is selected to perform the synchronization task 1. In another example, if the synchronization task 2 requires to synchronize the block 81 to the block 90, the second node device storing the block 81 to the block 90 is selected to perform the synchronization task 2.

Policy 2: Match according to a processing performance. According to the processing performance, one of a plurality of second node devices can be selected to perform a synchronization task. For example, if a processing performance of the node device 4 is better than a processing performance of the node device 5, the node device 4 can be selected to perform the synchronization task 1. The processing performance includes but is not limited to a CPU processing speed, a concurrent transmission processing capacity, a network bandwidth resource, or the like. The higher the processing performance, the higher the degree of execution, and the faster the synchronization task can be performed.

Policy 3: Match according to a trust degree. The trust degree is information used for describing a degree of trustworthiness of a node device. The higher the trust degree, the higher the degree of trustworthiness of the node device. Generally, a trust degree of a node device used by an official organization is higher than a trust degree of a node device used by a non-official organization. In an implementation, the trust degree may be expressed by scores. For example, a score range of the trust degree includes [0, 10], and the higher the score of the trust degree, the higher the degree of trustworthiness. In another implementation, the trust degree may be expressed by levels. For example, the trust degree includes three levels: high, medium, and low, and the degree of trustworthiness of the three levels sequentially decreases. According to the trust degree, one of the plurality of second node devices can be selected to perform a synchronization task. For example: if a trust degree of the node device 4 is higher than a trust degree of the node device 5, the node device 4 can be selected to perform the synchronization task 1.

One synchronization task is performed by one node device. It may be understood that the foregoing policies are not exhaustive, and the embodiments of this application may also be applied to other policies, for example: a random matching policy, that is, one of the plurality of second node devices can be randomly selected to perform a synchronization task; and in another example, a weighted average policy, that is, weights can be set for a plurality of impact factors (a storage status factor, a trust degree factor, and a processing performance factor) respectively, and one of the plurality of second node devices can be selected in a weighted average manner to perform the synchronization task. In addition, in the foregoing policy 2 and policy 3, if the second node device selected to perform a synchronization task does not store a to-be-synchronized block indicated by the synchronization task, the second node device can obtain the block from another node device (for example, the consensus node device) in the blockchain network and return the block to the first node device. For example: the synchronization task 1 requires to synchronize the block 1 to the block 10. Through the policy 2 or the policy 3, the node device 4 is selected to perform the synchronization task 1, but the node device 4 does not store the block 1 to the block 10. Therefore, the node device 4 can obtain the block 1 to the block 10 from the consensus node device and return the block 1 to the block 10 to the first node device.

(4) Concurrently transmit the plurality of synchronization tasks to the second node devices in order to enable the second node devices to perform the synchronization tasks.

(5) Fill the frameworks in the framework set with the blocks returned by the second node devices.

If a synchronization task adopts any policy but does not match the second node device that needs to perform the synchronization task correspondingly, for example, no node device in the candidate node set completely stores the blocks required by a framework, it is possible that the framework is not properly constructed, and it can be considered to rebuild the framework and re-update the synchronization task. Certainly, it can also be compatible with an existing synchronization manner, and the blocks required by the framework corresponding to the synchronization task that does not match the node device are synchronized one by one.

The synchronization processing solution for framework filling provided in the embodiments of this application is based on one synchronization task corresponding to one framework, which synchronizes the plurality of blocks at one time, effectively improving the synchronization processing efficiency. Further, synchronization tasks corresponding to a plurality of frameworks are concurrently transmitted during one synchronization processing, so that more blocks are synchronized at one time based on the plurality of frameworks, which further improves the synchronization processing efficiency.

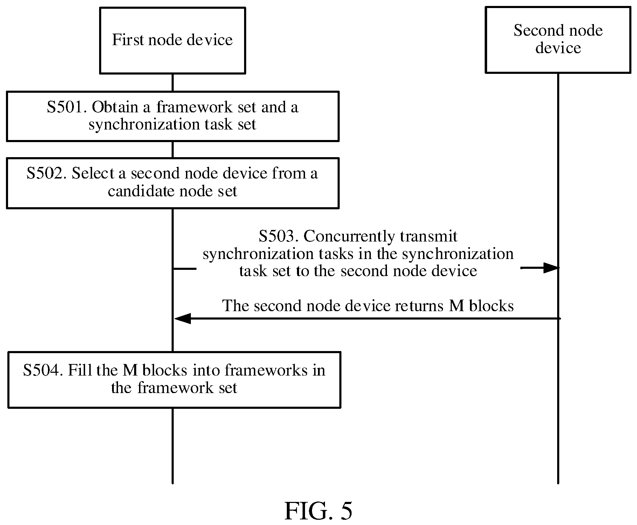

FIG. 5 is a flowchart of a synchronization processing method according to an exemplary embodiment of this application. The method is performed by a first node device in a blockchain network, and the first node device may be any node device in the blockchain network. Subsequent embodiments of this application are described by using an example in which the first node device is the node device 3 in the blockchain network shown in FIG. 3. The blockchain network includes a candidate node set, and the candidate node set includes a plurality of candidate node devices connected to the first node device. The method includes the following steps S501 to S504:

S501. Obtain a framework set and a synchronization task set, the framework set being used for storing M blocks to be synchronized by a first node device. The framework set includes P frameworks (P ≥ 2), the synchronization task set includes P synchronization tasks, and one framework corresponds to one synchronization task. M and P both are positive integers.

Using any framework in the framework set as an example, the any framework is represented as a target framework. The target framework includes N data units (N>1), the N data units are configured to store N blocks to be synchronized by the first node device, the N blocks are in one-to-one correspondence to the N data units, and N is a positive integer and N≤M. The N data units in the target framework are sequentially arranged, and the N blocks are consecutive blocks in the blockchain network. An i^{th} data unit among the N data units is configured to store an i^{th} block among the N blocks; and i is a positive integer and 1≤i≤N. Referring to the example shown in FIG. 4, the target framework may be any one of a framework 1 to a framework 10. Using the target framework being the framework 1 as an example, N is 10, the first data unit of the target framework is configured to store a block 1, the second data unit of the target framework is a block 2, and so on. The target framework corresponds to a target synchronization task, the target synchronization task carries indication information, and the indication information may include indexes of blocks corresponding to the first and last two data units in the target framework. The index herein may be a hash value of the block, or a generation timestamp of the block, or a block height corresponding to the block. The indication information may also include indexes of all blocks used by the target framework for storage. Using the target framework being the framework 1 shown in FIG. 4 as an example, the target synchronization task may include indication information, and the indication information may include indexes of the block 1 and the block 10 and may also include indexes of the block 1 to the block 10.

S502. Select one second node device from the candidate node set for each of the P synchronization tasks.

The second node device is one node device that is in the candidate node set and that is configured to perform a synchronization task. In this step, the foregoing policy may be used to select the at least one second node device, and the policy may include but is not limited to any one of the following: The second node device is selected according to a storage status matching manner, a processing performance matching manner, and a trust degree matching manner.

S503. Concurrently transmit synchronization tasks in the synchronization task set to the second node devices in order to enable the second node devices to perform the synchronization tasks and return the M blocks.

The so-called concurrent transmission in batches means that the first node device divides the synchronization tasks in the synchronization task set into batches, and concurrently transmits the synchronization tasks in batches. A batch division manner may be, for example, according to an order of the blocks, and a batch of a synchronization task corresponding to a block with a former index is prior to a batch of a synchronization task corresponding to a block with a later index.

S504. Fill the frameworks in the framework set with the M blocks.

A filling process is a process of storing the block in the corresponding data unit. The first node device sequentially fills the data units of the frameworks with the M blocks returned by the second node devices. Using the target framework as an example, it is assumed that the target framework corresponds to the target synchronization task, the target framework is any one in the framework set, and the target synchronization task is any one in the synchronization task set. A target second node device is a second node device selected for the target synchronization task in S502. After the target synchronization task is transmitted to the target second node device through S503, the target second node device performs the target synchronization task and returns the N blocks to the first node device; and the first node device respectively fills the N data units of the target framework with the N blocks.

In the embodiments of this application, when performing synchronization processing, the first node device obtains a framework set including a plurality of frameworks and a synchronization task set, the framework set being used for storing M blocks to be synchronized by the first node device; for each framework, selects one second node device from a candidate node set, the second node devices being candidate node devices in the candidate node set; concurrently transmits synchronization tasks in the synchronization task set to the second node devices in order to enable the second node devices to perform the synchronization tasks and return the M blocks; and then fills the frameworks in the framework set with the M blocks. Through the synchronization processing solution for framework filling, based on one synchronization task corresponding to one framework, the plurality of blocks is synchronized at one time, effectively improving the synchronization processing efficiency. Synchronization tasks corresponding to a plurality of frameworks are concurrently transmitted during one synchronization processing, so that more blocks can be synchronized at one time based on the plurality of frameworks, which further improves the synchronization processing efficiency.

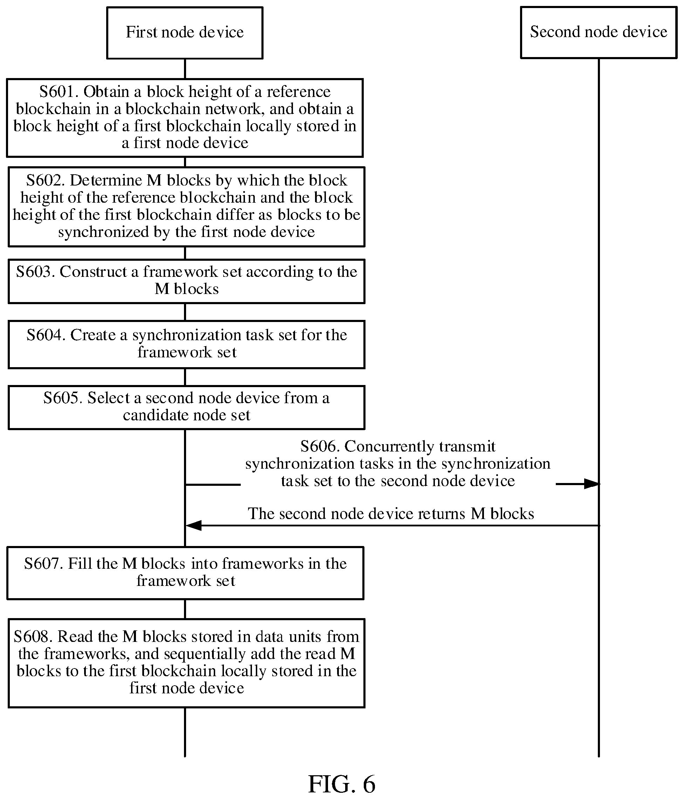

FIG. 6 is a flowchart of another synchronization processing method according to an exemplary embodiment of this application. The method is performed by a first node device in a blockchain network, and the first node device may be any node device in the blockchain network. Subsequent embodiments of this application are described by using an example in which the first node device is the node device 3 in the blockchain network shown in FIG. 3. The blockchain network includes a candidate node set, and the candidate node set includes a plurality of candidate node devices connected to the first node device. The method includes the following steps S601 to S608:
S601. Obtain a block height of a reference blockchain in the blockchain network, and obtain a block height of a first blockchain locally stored in the first node device.

The reference blockchain refers to the longest (or most complete) blockchain in blockchains stored in node devices in the blockchain network, and usually is a blockchain stored in a consensus node device. The block height is used for indicating the quantity of blocks connected on the blockchain. The block height is an identifier of the block, and may be used for indicating a position of the block in the blockchain. A block height of a founding block in the blockchain is 0 by default, a block height of the first block after the founding block is 1 (the first block is referred to as a block 1 for short), a block height of the second block after the founding block is 2 (the second block is referred to as a block 2), and so on. For example, a block height of a current block of the reference blockchain is 100 (the current block may be referred to as a block 100 for short), which means that 100 blocks have been stacked on the founding block, that is, the quantity of the blocks on the reference blockchain formed between the founding block and the block 100 is 101.

S602. Determine M blocks by which the block height of the reference blockchain and the block height of the first blockchain differ as blocks to be synchronized by the first node device, where M is a positive integer.

Assuming that the block height of the reference blockchain is 200, and the block height of the first blockchain is 100, the 100 blocks by which the reference blockchain and the first blockchain differ include a block 101 to a block 200, and the 100 blocks in the difference are the blocks to be synchronized by the first node device, that is, M=100 in this case.

S603. Construct a framework set according to the M blocks. The framework set includes P frameworks, where P is a positive integer. For construction of the framework set, reference may be made to the example shown in FIG. 4, and details are not repeated herein.

S604. Create a synchronization task set for the framework set, the synchronization task set including P synchronization tasks, and one framework corresponding to one synchronization task.

S605. Select one second node device from the candidate node set, the one second node device being one candidate node device in the candidate node set.

In an implementation, corresponding to the foregoing policy 1, that is, in S605, the one second node device can be selected from the candidate node set according to a storage status matching manner. The selection process in S605 may include the following steps s21 to s22:
s21. Receive block storage statements of the candidate node devices in the candidate node set.

The block storage statements include a block storage status of the candidate node device. For example, if a block storage statement of a candidate node device includes indexes of a block 1 to a block 10, it indicates that the candidate node device states that the candidate node device stores the block 1 to the block 10.

s22. Select one candidate node device from the candidate node set as the one second node device according to the block storage statements of the candidate node devices in the candidate node set.

In this step, for a synchronization task, the node device that states that the node device stores the block indicated by the synchronization task can be determined as the second node device that performs the synchronization task, so as to ensure that the second node device can perform the synchronization task and can return the block indicated by the synchronization task. In s21 to s22, the second node device is selected according to the block storage status, which can increase the probability of the synchronization task being successfully performed and increase the success rate of synchronization processing.

In an implementation, corresponding to the foregoing policy 2, that is, in S605, the one second node device can be selected from the candidate node set according to a processing performance matching manner. The selection process in S605 may include the following steps s23 to s24:
s23. Obtain processing performances of the candidate node devices in the candidate node set.

s24. Determine one candidate node device whose processing performance in the candidate node set is better than a performance threshold as the one second node device.

In s23 to s24, the processing performance includes but is not limited to a CPU processing speed, a concurrent transmission processing capacity, a network bandwidth resource, or the like. The higher the processing performance, the higher the degree of execution, and the second node device can assist the first node device in performing the synchronization processing faster, which can enhance the security of the synchronization processing. The performance threshold may be set according to an actual situation. For example: the performance threshold may be an average value of processing performances of the candidate node devices in the candidate node set, that is, at least one candidate node device whose processing performance is higher than the average value can be determined as the at least one second node device.

In an implementation, corresponding to the foregoing policy 3, that is, in S605, the one second node device can be selected from the candidate node set according to a trust degree matching manner. The selection process in S605 may include the following steps s25 to s26:

s25. Obtain trust degrees of the candidate node devices in the candidate node set.

s26. Determine one candidate node device whose trust degree in the candidate node set is higher than a trust threshold as the one second node device.

In s25 to s26, the trust degree is used for describing a degree of trustworthiness of the node device, and the higher the trust degree, the more reliable the node device. The trust threshold may be set according to an actual situation. For example, the trust threshold may be 5 points, and one candidate node device with a score of the trust degree higher than 5 points can be determined as the one second node device. The one second node device is selected according to the trust degree, which can prevent some malicious nodes from interfering with the synchronization processing and enhance the security of the synchronization processing.

S606. Concurrently transmit synchronization tasks in the synchronization task set to the second node devices in order to enable the second node devices to perform the synchronization tasks and return the M blocks.

S607. Fill the frameworks in the framework set with the M blocks.

S608. Read the M blocks stored in the data units from the frameworks, and sequentially add the read M blocks to a first blockchain locally stored in the first node device.

After the frameworks are completely filled, the first node device can sequentially (for example, in an order of generation timestamps of the blocks) add the blocks stored in the frameworks to a local blockchain of the first node device, thereby achieving an update of the local blockchain of the first node device. Using the target framework as an example, the first node device reads N blocks sequentially stored in N data units from the target framework, and adds the read N blocks to the first blockchain locally stored in the first node device. The framework is a data structure. After the N blocks are stored in the target framework, the N blocks are sequentially read and added to the first blockchain locally stored in the first node device, so that the N blocks are successfully updated on the first blockchain. When blocks of all the frameworks in the framework set are sequentially added to the first blockchain, the first node device can complete synchronization of all the blocks and catch up with another node device in the blockchain network in time.

In the embodiments of this application, when performing synchronization processing, the first node device obtains a framework set including a plurality of frameworks and a synchronization task set, the framework set being used for storing M blocks to be synchronized by the first node device; for each framework selects one second node device from the candidate node set; concurrently transmits synchronization tasks in the synchronization task set to the second node devices in order to enable the second node devices to perform the synchronization tasks and return the M blocks; and then fills the frameworks in the framework set with the M blocks. Through the synchronization processing solution for framework filling, based on one synchronization task corresponding to one framework, the plurality of blocks are synchronized at one time, effectively improving the synchronization processing efficiency. Synchronization tasks corresponding to a plurality of frameworks can be concurrently transmitted during one synchronization processing, so that more blocks are synchronized at one time based on the plurality of frameworks, which further improves the synchronization processing efficiency.

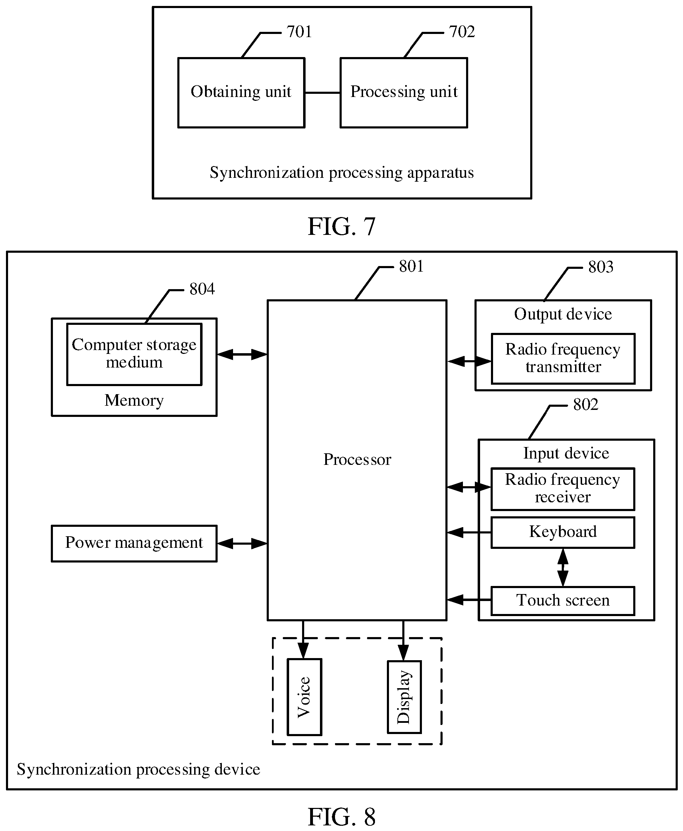

FIG. 7 is a schematic structural diagram of a synchronization processing apparatus according to an exemplary embodiment of this application. The synchronization processing apparatus is disposed in a first node device in a blockchain network. Specifically, the synchronization processing apparatus may be a computer program (including program code) running in the first node device. For example, the synchronization processing apparatus may be application software in the first node device. The synchronization processing apparatus may be configured to perform corresponding steps in the embodiments shown in FIG. 5 to FIG. 6. The first node device may be any node device in the blockchain network. For example, the first node device is a node device in the blockchain network shown in FIG. 3. The blockchain network includes a candidate node set, and the candidate node set includes a plurality of candidate node devices connected to the first node device. As shown in FIG. 7, the synchronization processing apparatus includes:

an obtaining unit 701, configured to obtain a framework set and a synchronization task set, the framework set being used for storing M blocks to be synchronized by the first node device; the framework set including P frameworks, the synchronization task set including P synchronization tasks, the P frameworks being in a one-to-one correspondence to the P synchronization tasks, and M and P both being positive integers; where P is greater than or equal to 2;
a processing unit 702, configured to select one second node device from the candidate node set, the one second node device being one candidate node device in the candidate node set; concurrently transmit synchronization tasks in the synchronization task set to each second node device in order to enable each second node device to perform the synchronization tasks and return the M blocks; and fill the frameworks in the framework set with the M blocks.

The framework set includes a target framework, and the target framework is any one of the P frameworks; and the target framework includes N data units, the N data units are configured to store N blocks to be synchronized by the first node device, the N blocks are in a one-to-one correspondence to the N data units, and N is a positive integer and N≤M.

In an implementation, The N data units in the target framework are sequentially arranged, and the N blocks are consecutive blocks in the blockchain network. An i^{th} data unit among the N data units is configured to store an i^{th} block among the N blocks; and i is a positive integer and 1≤i≤N.

In an implementation, a target second node device is one of the P second node devices; the target second node device is configured to perform a target synchronization task corresponding to the target framework, and return the N blocks to the first node device; and a specific manner for the first node device to fill the target framework with the N blocks is: respectively filling the N data units of the target framework with the N blocks.

In an implementation, the processing unit 702 is further configured to:
read the N blocks stored in the N data units from the target framework, and sequentially add the read N blocks to a first blockchain locally stored in the first node device.

In an implementation, the processing unit 702 is specifically configured to:
obtain trust degrees of the candidate node devices in the candidate node set; and
determine one candidate node device whose trust degree in the candidate node set is higher than a trust threshold as the second node device.

In an implementation, the processing unit 702 is specifically configured to:
obtain processing performances of the candidate node devices in the candidate node set; and
determine one candidate node device whose processing performance in the candidate node set is better than a performance threshold as the second node device.

In an implementation, the processing unit 702 is specifically configured to:
receive block storage statements of the candidate node devices in the candidate node set; and
select one candidate node device from the candidate node set as second node device according to the block storage statements of the candidate node devices in the candidate node set.

In an implementation, the obtaining unit 701 is specifically configured to:
obtain a block height of a reference blockchain in the blockchain network, and obtain a block height of a first blockchain locally stored in the first node device;
determine M blocks by which the block height of the reference blockchain and the block height of the first blockchain differ as blocks to be synchronized by the first node device; and
construct a framework set according to the M blocks.

According to an embodiment of this application, the units of the synchronization processing apparatus shown in FIG. 7 may be separately or wholly combined into one or several other units, or one (or more) of the units herein may further be divided into a plurality of units of smaller functions. In this way, same operations can be implemented, and implementation of the technical effects of the embodiments of this application is not affected. The foregoing units are divided based on logical functions. In actual application, a function of one unit may also be implemented by a plurality of units, or functions of a plurality of units are implemented by one unit. In other embodiments of this application, the synchronization processing apparatus may also include other units. In actual application, the functions may also be cooperatively implemented by other units and may be cooperatively implemented by a plurality of units. According to another embodiment of this application, a computer program (including program code) that can perform the steps in the corresponding methods shown in FIG. 5 to FIG. 6 may be run on a general computing device, such as a computer, which include processing elements and storage elements such as a central processing unit (CPU), a random access memory (RAM), and a read-only memory (ROM), to construct the synchronization processing apparatus shown in FIG. 7, and implement the synchronization processing method in the embodiments of this application. The computer program may be recorded in, for example, a computer readable recording medium, and may be loaded into the foregoing computing device by using the computer readable recording medium, and run on the computing device.

In the embodiments of this application, when performing synchronization processing, the first node device obtains a framework set and a synchronization task set, the framework set being used for storing M blocks to be synchronized by the first node device; selects, for each of a plurality of frameworks in the framework set, one second node device from a candidate node set, the one second node device being one candidate node device in the candidate node set; concurrently transmits synchronization tasks in the synchronization task set to the second node devices in order to enable the second node devices to perform the synchronization tasks and return the M blocks; and then fills the frameworks in the framework set with the M blocks. Through the synchronization processing solution for framework filling, based on one synchronization task corresponding to one framework, the plurality of blocks are synchronized at one time, effectively improving the synchronization processing efficiency. Synchronization tasks corresponding to a plurality of frameworks are concurrently transmitted during one synchronization processing, so that more blocks are synchronized at one time based on the plurality of frameworks, which further improves the synchronization processing efficiency.

FIG. 8 is a schematic structural diagram of a synchronization processing device according to an exemplary embodiment of this application. This synchronization processing device is a first node device in a blockchain network, and the first node device may be any node device in the blockchain network. For example, the first node device is a node device in the blockchain network shown in FIG. 3. The blockchain network includes a candidate node set, and the candidate node set includes a plurality of candidate node devices connected to the first node device. As shown in FIG. 8, the synchronization processing device includes at least a processor 801, an input device 802, an output device 803, and a computer storage medium 804. The processor 801, the input device 802, the output device 803, and the computer storage medium 804 may be connected by a bus or in another manner. The computer storage medium 804 may be stored in a memory of the synchronization processing device. The computer storage medium 804 is configured to store a computer program. The computer program includes program instructions. The processor 801 is configured to execute the program instructions stored in the computer storage medium 804. The processor 801 (or referred to as a central processing unit (CPU)) is a computing core and a control core of the synchronization processing device, is suitable for implementing one or more instructions, and is specifically suitable for loading and executing one or more instructions to implement a corresponding method procedure or a corresponding function provided in the embodiments of this application.

The embodiments of this application further provide a computer storage medium (memory), and the computer storage medium is a memory device in the synchronization processing device and is configured to store programs and data. It may be understood that the computer storage medium herein may include an internal storage medium of the synchronization processing device and certainly may also include an extended storage medium supported by the synchronization processing device. The computer storage medium provides storage space, and the storage space stores an operating system of the synchronization processing device. In addition, the storage space further stores one or more instructions suitable for being loaded and executed by the processor 801. The instructions may be one or more computer programs (including program code). The computer storage medium herein may be a high-speed RAM or a non-volatile memory, for example, at least one magnetic disk memory. Optionally, the computer storage medium may further be at least one computer storage medium located away from the foregoing processor.

One or more instructions are stored in the computer storage medium; and one or more second instructions stored in the computer storage medium may be loaded and executed by the processor 801 to implement corresponding steps of the method in the foregoing embodiments related to the synchronization processing method. In a specific implementation, the one or more second instructions in the computer storage medium are loaded by the processor 801 to perform the following steps:
obtaining a framework set and a synchronization task set, the framework set being used for storing M blocks to be synchronized by the first node device, the framework set including P frameworks, the synchronization task set including P synchronization tasks, the P frameworks being in a one-to-one correspondence to the P synchronization tasks, and M and P both being positive integers and P ≥2;
for each framework, selecting one second node device from the candidate node set, the one second node device being one candidate node device in the candidate node set;
concurrently transmitting synchronization tasks in the synchronization task set to the second node devices in order to enable the second node devices to perform the synchronization tasks and return the M blocks; and
filling the frameworks in the framework set with the M blocks.

In an implementation, the framework set includes a target framework, and the target framework is any one of the P frameworks; and the target framework includes N data units, the N data units are configured to store N blocks to be synchronized by the first node device, the N blocks are in a one-to-one correspondence to the N data units, and N is a positive integer and N≤M and N>1.

In an implementation, The N data units in the target framework are sequentially arranged, and the N blocks are consecutive blocks in the blockchain network. an i^{th} data unit among the N data units is configured to store an i^{th} block among the N blocks; and i is a positive integer and 1≤i≤N.

In an implementation, a target second node device is any one of the P second node devices; the target second node device is configured to perform a target synchronization task corresponding to the target framework, and return the N blocks to the first node device; and a specific manner for the first node device to fill the target framework with the N blocks is: respectively filling the N data units of the target framework with the N blocks.

In an implementation, the one or more instructions in the computer storage medium are loaded and executed by the processor 801 to further perform following step:
reading the N blocks stored in the N data units from the target framework, and sequentially add the read N blocks to a first blockchain locally stored in the first node device.

In an implementation, when one or more instructions in the computer storage medium are loaded by the processor 801 to perform the step of second node devices from the candidate node set, the following steps are specifically performed:
obtaining trust degrees of the candidate node devices in the candidate node set; and
determining one candidate node device whose trust degree in the candidate node set is higher than a trust threshold as the second node device.

In an implementation, when one or more instructions in the computer storage medium are loaded by the processor 801 to perform the step of selecting second node devices from the candidate node set, the following steps are specifically performed:
obtaining processing performances of the candidate node devices in the candidate node set; and
determining one candidate node device whose processing performance in the candidate node set is better than a performance threshold as the second node device.

In an implementation, when one or more instructions in the computer storage medium are loaded by the processor 801 to perform the step of selecting second node devices from the candidate node set, the following steps are specifically performed:
receiving block storage statements of the candidate node devices in the candidate node set; and
selecting one candidate node device from the candidate node set as the second node device according to the block storage statements of the candidate node devices in the candidate node set.

In an implementation, when one or more instructions in the computer storage medium are loaded by the processor 801 to perform the step of obtaining a framework set, the following steps are specifically performed:
obtaining a block height of a reference blockchain in the blockchain network, and obtain a block height of a first blockchain locally stored in the first node device;
determining M blocks by which the block height of the reference blockchain and the block height of the first blockchain differ as blocks to be synchronized by the first node device; and
constructing a framework set according to the M blocks.

In the embodiments of this application, when performing synchronization processing, the first node device obtains a framework set and a synchronization task set, the framework set being used for storing M blocks to be synchronized by the first node device; selects, for each framework of a plurality of frameworks in the framework set, one second node device from a candidate node set, the one second node device being one candidate node device in the candidate node set; concurrently transmits synchronization tasks in the synchronization task set to the second node devices in order to enable the second node devices to perform the synchronization tasks and return the M blocks; and then fills the frameworks in the framework set with the M blocks. Through the synchronization processing solution for framework filling, based on one synchronization task corresponding to one framework, the plurality of blocks are synchronized at one time, effectively improving the synchronization processing efficiency. Synchronization tasks corresponding to a plurality of frameworks are concurrently transmitted during one synchronization processing, so that more blocks are synchronized at one time based on the plurality of frameworks, which further improves the synchronization processing efficiency.

An embodiment of this application further provides a computer program product including instructions, the instructions, when run on a computer, causing the computer to perform the method according to the foregoing embodiments.

What are disclosed above are merely examples of embodiments of this application, and certainly are not intended to limit the protection scope of this application. Therefore, equivalent variations made in accordance with the claims of this application shall fall within the scope of this application.

## Claims

1. A method for synchronization processing, performed by a first node device in a blockchain network, the blockchain network comprising a candidate node set, the candidate node set comprising a plurality of candidate node devices connected to the first node device, **characterized in that**, the method comprises:
obtaining (S501) a framework set and a synchronization task set, the framework set being used for storing M blocks to be synchronized by the first node device, the framework set comprising a plurality of P frameworks, the synchronization task set comprising P synchronization tasks, the P frameworks being in a one-to-one correspondence to the P synchronization tasks, and M and P both being positive integers where P is greater than or equal to two; wherein the M blocks to be synchronized in the framework set are split into P sequences of blocks, each forming a respective one of the P frameworks; and wherein each of the P frameworks comprises the same quantity N of data units for storing the respective sequence of blocks, N being an integer greater than one; and wherein each of the P synchronization tasks carries indication information, and the indication information includes an index of a first block and an index of a last block in a respective sequence of the P sequences of blocks;
for each of the P synchronization tasks, selecting (S502) one second node device from the candidate node set, the one second node device being one candidate node device in the candidate node set;
concurrently transmitting (S503) the synchronization tasks in the synchronization task set to the P second node devices in order to enable each of the P second node devices to return, according to the indication information carried in each of the received synchronization tasks, comprising:
dividing the synchronization tasks in the synchronization task set into at least two batches included in the M blocks, based on the indication information; and
transmitting each batch according to a corresponding order of the M blocks at one time;
obtaining the M blocks returned by the second node devices and
filling (S504) the frameworks in the framework set with the M blocks.

2. The method according to claim 1, wherein the N data units in each framework are sequentially arranged, and the N blocks are consecutive blocks in the blockchain network; an i^{th} data unit among the N data units is configured to store an i^{th} block among the N blocks; and i is a positive integer and 1≤i≤N.

3. The method according to claim 1, wherein a target second node device is any one of P second node devices; the target second node device is configured to perform a target synchronization task corresponding to each framework, and return the N blocks to the first node device; and
for the target second node device, the filling the M blocks into the frameworks in the framework set comprises:
respectively filling the N blocks into the N data units of the target framework.

4. The method according to claim 3, further comprising:
reading the N blocks stored in the N data units from the target framework, and sequentially adding the read N blocks to a first blockchain locally stored in the first node device.

5. The method according to any one of claims 1 to 4, wherein the selecting one second node device from the candidate node set comprises:
obtaining trust degrees of the candidate node devices in the candidate node set; and
determining one candidate node device whose trust degree in the candidate node set is higher than a trust threshold as the second node device.

6. The method according to any one of claims 1 to 4, wherein the selecting one second node device from the candidate node set comprises:
obtaining processing performances of the candidate node devices in the candidate node set; and
determining one candidate node device whose processing performance in the candidate node set is better than a performance threshold as the second node device.

7. The method according to any one of claims 1 to 4, wherein the selecting one second node device from the candidate node set comprises:
receiving block storage statements of the candidate node devices in the candidate node set; and
selecting one candidate node device from the candidate node set as the one second node device according to the block storage statements of the candidate node devices in the candidate node set.

8. The method according to any one of claims 1 to 4, wherein the obtaining a framework set comprises:
obtaining a block height of a reference blockchain in the blockchain network, and obtaining a block height of a first blockchain locally stored in the first node device;
determining M blocks by which the block height of the reference blockchain and the block height of the first blockchain differ as blocks to be synchronized by the first node device; and
constructing the framework set according to the M blocks.

9. A synchronization processing device, the synchronization processing device being a first node device in a blockchain network, the blockchain network comprising a candidate node set, the candidate node set comprising a plurality of candidate node devices connected to the first node device, and the synchronization processing device comprising an input device and an output device, and further comprising:
a processor (801), suitable for implementing one or more instructions; and
a computer storage medium (804), storing one or more instructions, the one or more instructions being loaded by the processor to perform the synchronization processing method according to any one of claims 1 to 8.

10. A computer storage medium, storing one or more instructions, the one or more instructions being loaded by a processor to perform the synchronization processing method according to any one of claims 1 to 8.

11. A computer program product comprising instructions, the computer program product, when run on a computer, causing the computer to perform the synchronization processing method according to any one of claims 1 to 8.

## Patentansprüche

1. Verfahren zur Synchronisationsverarbeitung, durchgeführt von einer ersten Knotenvorrichtung in einem Blockchain-Netzwerk, wobei das Blockchain-Netzwerk einen Kandidatenknotensatz umfasst, wobei der Kandidatenknotensatz eine Mehrzahl von Kandidatenknotenvorrichtungen umfasst, die mit der ersten Knotenvorrichtung verbunden sind, **dadurch gekennzeichnet, dass** das Verfahren umfasst:
Erhalten (S501) eines Rahmensatzes und eines Synchronisationsaufgabensatzes, wobei der Rahmensatz zum Speichern von M zu synchronisierenden Blöcken durch die erste Knotenvorrichtung verwendet wird, wobei der Rahmensatz eine Mehrzahl von P Rahmen umfasst, wobei der Synchronisationsaufgabensatz P Synchronisationsaufgaben umfasst, wobei die P Rahmen in einer Eins-zu-eins-Entsprechung zu den P Synchronisationsaufgaben stehen, und M und P beide positive ganze Zahlen sind, wobei P größer als oder gleich zwei ist; wobei die M zu synchronisierenden Blöcke im Rahmensatz in P Blockfolgen aufgeteilt sind, wobei jede einen jeweiligen der P Rahmen bildet; und wobei jeder der P Rahmen die gleiche Anzahl N von Dateneinheiten zum Speichern der jeweiligen Blockfolge umfasst, wobei N eine ganze Zahl größer als eins ist; und wobei jede der P Synchronisationsaufgaben Hinweisinformation trägt, und die Hinweisinformation einen Index eines ersten Blocks und einen Index eines letzten Blocks in einer jeweiligen Folge der P Blockfolgen beinhaltet;
für jede der P Synchronisationsaufgaben, Auswählen (S502) einer zweiten Knotenvorrichtung aus dem Kandidatenknotensatz, wobei die eine zweite Knotenvorrichtung eine Kandidatenknotenvorrichtung im Kandidatenknotensatz ist;
gleichzeitiges Übertragen (S503) der Synchronisationsaufgaben im Synchronisationsaufgabensatz an die P zweiten Knotenvorrichtungen, um jeder der P zweiten Knotenvorrichtungen zu ermöglichen, gemäß der in jeder der empfangenen Synchronisationsaufgaben enthaltenen Hinweisinformation zurückzugeben, umfassend:
Aufteilen der Synchronisationsaufgaben im Synchronisationsaufgabensatz in mindestens zwei Chargen, die in den M Blöcken enthalten sind, basierend auf der Hinweisinformation; und
Übertragen jeder Charge gemäß einer entsprechenden Reihenfolge der M Blöcke auf einmal;
Erhalten der von den zweiten Knotenvorrichtungen zurückgegebenen M Blöcke; und
Befüllen (S504) der Rahmen im Rahmensatz mit den M Blöcken.

2. Verfahren nach Anspruch 1, wobei die N Dateneinheiten in jedem Rahmen sequenziell angeordnet sind, und die N Blöcke aufeinanderfolgende Blöcke im Blockchain-Netzwerk sind; eine i-te Dateneinheit unter den N Dateneinheiten dazu konfiguriert ist, einen i-ten Block unter den N Blöcken zu speichern; und i eine positive ganze Zahl ist und 1≤i≤N.

3. Verfahren nach Anspruch 1, wobei eine zweite Zielknotenvorrichtung eine beliebige der P zweiten Knotenvorrichtungen ist; wobei die zweite Zielknotenvorrichtung dazu konfiguriert ist, eine jedem Rahmen entsprechende Zielsynchronisationsaufgabe durchzuführen und die N Blöcke an die erste Knotenvorrichtung zurückzugeben; und
für die zweite Zielknotenvorrichtung das Befüllen der M Blöcke in die Rahmen im Rahmensatz umfasst:
jeweiliges Befüllen der N Blöcke in die N Dateneinheiten des Zielrahmens.

4. Verfahren nach Anspruch 3, ferner umfassend:
Lesen der in den N Dateneinheiten gespeicherten N Blöcke aus dem Zielrahmen und sequenzielles Hinzufügen der gelesenen N Blöcke zu einer in der ersten Knotenvorrichtung lokal gespeicherten ersten Blockchain.

5. Verfahren nach einem der Ansprüche 1 bis 4, wobei das Auswählen einer zweiten Knotenvorrichtung aus dem Kandidatenknotensatz umfasst:
Erhalten von Vertrauensgraden der Kandidatenknotenvorrichtungen im Kandidatenknotensatz; und
Bestimmen einer Kandidatenknotenvorrichtung, deren Vertrauensgrad im Kandidatenknotensatz höher als ein Vertrauensschwellenwert ist, als die zweite Knotenvorrichtung.

6. Verfahren nach einem der Ansprüche 1 bis 4, wobei das Auswählen einer zweiten Knotenvorrichtung aus dem Kandidatenknotensatz umfasst:
Erhalten von Verarbeitungsleistungen der Kandidatenknotenvorrichtungen im Kandidatenknotensatz; und
Bestimmen einer Kandidatenknotenvorrichtung, deren Verarbeitungsleistung im Kandidatenknotensatz besser als ein Leistungsschwellenwert ist, als die zweite Knotenvorrichtung.

7. Verfahren nach einem der Ansprüche 1 bis 4, wobei das Auswählen einer zweiten Knotenvorrichtung aus dem Kandidatenknotensatz umfasst:
Empfangen von Blockspeicheraussagen der Kandidatenknotenvorrichtungen im Kandidatenknotensatz; und
Auswählen einer Kandidatenknotenvorrichtung aus dem Kandidatenknotensatz als die eine zweite Knotenvorrichtung gemäß den Blockspeicheraussagen der Kandidatenknotenvorrichtungen im Kandidatenknotensatz.

8. Verfahren nach einem der Ansprüche 1 bis 4, wobei das Erhalten eines Rahmensatzes umfasst:
Erhalten einer Blockhöhe einer Referenz-Blockchain im Blockchain-Netzwerk und Erhalten einer Blockhöhe einer in der ersten Knotenvorrichtung lokal gespeicherten ersten Blockchain;
Bestimmen von M Blöcken, um die die Blockhöhe der Referenz-Blockchain und die Blockhöhe der ersten Blockchain voneinander abweichen, als zu synchronisierende Blöcke durch die erste Knotenvorrichtung; und
Aufbauen des Rahmensatzes gemäß den M Blöcken.

9. Synchronisationsverarbeitungsvorrichtung, wobei die Synchronisationsverarbeitungsvorrichtung eine erste Knotenvorrichtung in einem Blockchain-Netzwerk ist, wobei das Blockchain-Netzwerk einen Kandidatenknotensatz umfasst, wobei der Kandidatenknotensatz eine Mehrzahl von Kandidatenknotenvorrichtungen umfasst, die mit der ersten Knotenvorrichtung verbunden sind, und die Synchronisationsverarbeitungsvorrichtung eine Eingabevorrichtung und eine Ausgabevorrichtung umfasst, und ferner umfassend:
einen Prozessor (801), geeignet zum Implementieren einer oder mehrerer Anweisungen; und
ein Computerspeichermedium (804), das eine oder mehrere Anweisungen speichert, wobei die eine oder mehreren Anweisungen von dem Prozessor geladen werden, um das Synchronisationsverarbeitungsverfahren nach einem der Ansprüche 1 bis 8 durchzuführen.

10. Computerspeichermedium, das eine oder mehrere Anweisungen speichert, wobei die eine oder mehrere Anweisungen von einem Prozessor geladen werden, um das Synchronisationsverarbeitungsverfahren nach einem der Ansprüche 1 bis 8 durchzuführen.

11. Computerprogrammprodukt, umfassend Anweisungen, wobei das Computerprogrammprodukt, wenn es auf einem Computer ausgeführt wird, den Computer veranlasst, das Synchronisationsverarbeitungsverfahren nach einem der Ansprüche 1 bis 8 durchzuführen.

## Revendications

1. Procédé de traitement de synchronisation, exécuté par un premier dispositif de nœud dans un réseau de chaîne de blocs, le réseau de chaîne de blocs comprenant un ensemble de nœuds candidats, l'ensemble de nœuds candidats comprenant une pluralité de dispositifs de nœud candidats connectés au premier dispositif de nœud, **caractérisé en ce que**, le procédé comprend :
l'obtention (S501) d'un ensemble de cadres et d'un ensemble de tâches de synchronisation, l'ensemble de cadres étant utilisé pour stocker M blocs à synchroniser par le premier dispositif de nœud, l'ensemble de cadres comprenant une pluralité de P cadres, l'ensemble de tâches de synchronisation comprenant P tâches de synchronisation, les P cadres étant en correspondance biunivoque avec les P tâches de synchronisation, et M et P étant tous deux des entiers positifs où P est supérieur ou égal à deux ; dans lequel les M blocs à synchroniser dans l'ensemble de cadres sont divisés en P séquences de blocs, chacune formant un cadre respectif parmi les P cadres ; et
dans lequel chacun des P cadres comprend la même quantité N d'unités de données pour stocker la séquence de blocs respective, N étant un entier supérieur à un ; et dans lequel chacune des P tâches de synchronisation porte des informations d'indication, et les informations d'indication comprennent un indice d'un premier bloc et un indice d'un dernier bloc dans une séquence respective parmi les P séquences de blocs ;
pour chacune des P tâches de synchronisation, la sélection (S502) d'un second dispositif de nœud parmi l'ensemble de nœuds candidats, le second dispositif de nœud étant un dispositif de nœud candidat dans l'ensemble de nœuds candidats ;
la transmission simultanée (S503) des tâches de synchronisation dans l'ensemble de tâches de synchronisation aux P seconds dispositifs de nœud afin de permettre à chacun des P seconds dispositifs de nœud de retourner, selon les informations d'indication portées dans chacune des tâches de synchronisation reçues, comprenant :
la division des tâches de synchronisation dans l'ensemble de tâches de synchronisation en au moins deux lots inclus dans les M blocs, sur la base des informations d'indication ; et
la transmission de chaque lot selon un ordre correspondant des M blocs à la fois ;
l'obtention des M blocs retournés par les seconds dispositifs de nœud ; et
le remplissage (S504) des cadres dans l'ensemble de cadres avec les M blocs.

2. Procédé selon la revendication 1, dans lequel les N unités de données dans chaque cadre sont disposées de manière séquentielle, et les N blocs sont des blocs consécutifs dans le réseau de chaîne de blocs ;
une i^{ème} unité de données parmi les N unités de données est configurée pour stocker un i^{ème} bloc parmi les N blocs ; et i est un entier positif et 1≤i≤N.

3. Procédé selon la revendication 1, dans lequel un second dispositif de nœud cible est l'un quelconque des P seconds dispositifs de nœud ; le second dispositif de nœud cible est configuré pour exécuter une tâche de synchronisation cible correspondant à chaque cadre, et retourner les N blocs au premier dispositif de nœud ; et
pour le second dispositif de nœud cible, le remplissage des M blocs dans les cadres de l'ensemble de cadres comprend :
le remplissage respectif des N blocs dans les N unités de données du cadre cible.

4. Procédé selon la revendication 3, comprenant en outre :
la lecture des N blocs stockés dans les N unités de données à partir du cadre cible, et l'ajout séquentiel des N blocs lus à une première chaîne de blocs qui est stockée localement dans le premier dispositif de nœud.

5. Procédé selon l'une quelconque des revendications 1 à 4, dans lequel la sélection d'un second dispositif de nœud parmi l'ensemble de nœuds candidats comprend :
l'obtention des degrés de confiance des dispositifs de nœud candidats dans l'ensemble de nœuds candidats ; et
la détermination d'un dispositif de nœud candidat dont le degré de confiance dans l'ensemble de nœuds candidats est supérieur à un seuil de confiance en tant que second dispositif de nœud.

6. Procédé selon l'une quelconque des revendications 1 à 4, dans lequel la sélection d'un second dispositif de nœud parmi l'ensemble de nœuds candidats comprend :
l'obtention des performances de traitement des dispositifs de nœud candidats dans l'ensemble de nœuds candidats ; et
la détermination d'un dispositif de nœud candidat dont la performance de traitement dans l'ensemble de nœuds candidats est meilleure qu'un seuil de performance en tant que second dispositif de nœud.

7. Procédé selon l'une quelconque des revendications 1 à 4, dans lequel la sélection d'un second dispositif de nœud parmi l'ensemble de nœuds candidats comprend :
la réception de déclarations de stockage de blocs des dispositifs de nœud candidats dans l'ensemble de nœuds candidats ; et
la sélection d'un dispositif de nœud candidat parmi l'ensemble de nœuds candidats en tant que second dispositif de nœud selon les déclarations de stockage de blocs des dispositifs de nœud candidats dans l'ensemble de nœuds candidats.

8. Procédé selon l'une quelconque des revendications 1 à 4, dans lequel l'obtention d'un ensemble de cadres comprend : l'obtention d'une hauteur de bloc d'une chaîne de blocs de référence dans le réseau de chaîne de blocs, et l'obtention d'une hauteur de bloc d'une première chaîne de blocs qui est stockée localement dans le premier dispositif de nœud ;
la détermination des M blocs par lesquels la hauteur de bloc de la chaîne de blocs de référence et la hauteur de bloc de la première chaîne de blocs diffèrent en tant que blocs à synchroniser par le premier dispositif de nœud ; et
la construction de l'ensemble de cadres selon les M blocs.

9. Dispositif de traitement de synchronisation, le dispositif de traitement de synchronisation étant un premier dispositif de nœud dans un réseau de chaîne de blocs, le réseau de chaîne de blocs comprenant un ensemble de nœuds candidats, l'ensemble de nœuds candidats comprenant une pluralité de dispositifs de nœud candidats connectés au premier dispositif de nœud, et le dispositif de traitement de synchronisation comprenant un dispositif d'entrée et un dispositif de sortie, et comprenant en outre :
un processeur (801), adapté pour mettre en œuvre une ou plusieurs instructions ; et
un support de stockage informatique (804), stockant une ou plusieurs instructions, les une ou plusieurs instructions étant chargées par le processeur pour exécuter le procédé de traitement de synchronisation selon l'une quelconque des revendications 1 à 8.

10. Support de stockage informatique, stockant une ou plusieurs instructions, les une ou plusieurs instructions étant chargées par un processeur pour exécuter le procédé de traitement de synchronisation selon l'une quelconque des revendications 1 à 8.

11. Produit de programme informatique comprenant des instructions, le produit de programme informatique, lorsqu'il est exécuté sur un ordinateur, amenant l'ordinateur à exécuter le procédé de traitement de synchronisation selon l'une quelconque des revendications 1 à 8.
